# EUROPEAN PATENT APPLICATION

(11) **EP 0 993 213 A1**
(43) Date of publication of application: **12.04.2000**
(21) Application number: 98118818.8
(22) Date of filing: 05.10.1998
(51) Int. Cl.: H04Q 7/38, H04B 7/26

(54) **Packet data multiplex scheme for downlink channels in broadband CDMA**

(71) Applicant: Sony International (Europe) GmbH, 50829 Köln (DE)
(72) Inventor: Halton, John c/o Sony International (Europe) GmbH, 70736 Fellbach (DE); Stirling-Gallacher, Richard Sony Int.(Europe) GmbH, 70736 Fellbach (DE)
(74) Representative: Körber, Martin, Dipl.-Phys.

(57) **Abstract**

The present invention relates to a method and to devices for transmitting and receiving data in a code division multiple access telecommunication system, in which data are communicated in time frames comprising a plurality of time slots between a first communication device (20), for example a base station, and one or more second communication devices (30, 40), for example mobile stations. The plurality of time slots in a time frame are allocated to at least two second communication devices (30, 40), whereby at least two succeeding time slots are respectively allocated to one second communication device (30). The present invention thereby enables an effective transmission of packet data and an optimum and fast power control.

## Description

The present invention relates to a method and to devices for transmitting and receiving data in a code division multiple access telecommunication system, in which data are communicated in time frames comprising a plurality of time slots between a first communication device and one or more second communication devices, whereby the plurality of time slots in a time frame are allocated to at least two second communication devices. The first communication device can for example be a base station and the second communication devices can for example be mobile stations of the telecommunication system.

Multiple access systems are used to support the simultaneous access of a plurality of mobile stations to one base station within the limited resources of the transmission system. Several multiple access systems are known, for example frequency division multiple access (FDMA), time division multiple access (TDMA) or code division multiple access (CDMA). Additional to these basic types of multiple access systems, combinations of these different systems are possible and in practical use. The GSM-system, for example, uses a combination of FDMA and TDMA.

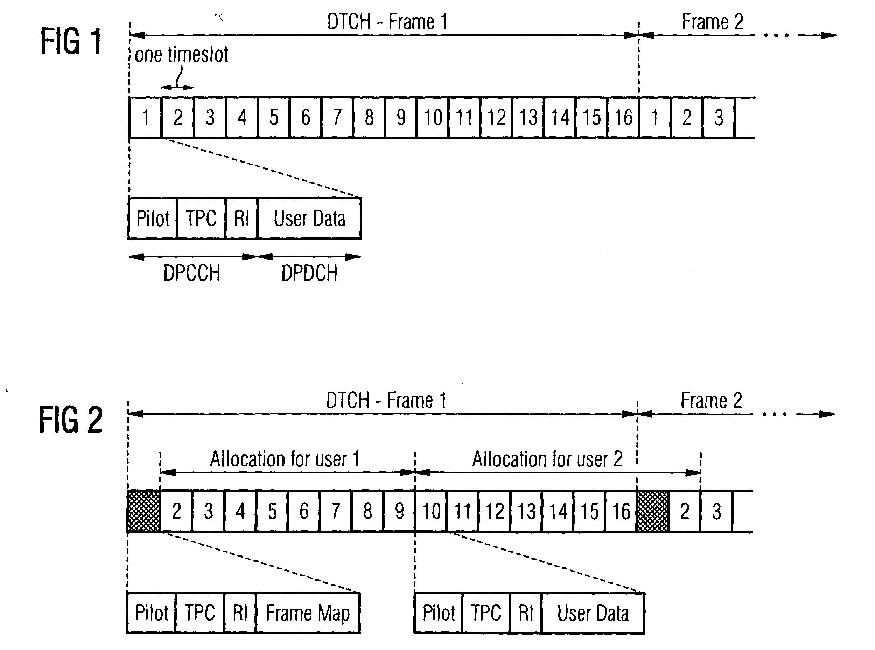

The present invention particularly relates to the transmission and the reception of data in a code division multiple access system, in which data are communicated in time frames comprising a plurality of time slots. Such a system is shown in figure 1, in which each time frame comprises 16 time slots. In a currently proposed wideband direct sequence CDMA (WCDMA) system, data are communicated between a base station and one or more mobile stations in a dedicated traffic channel (DTCH), which is shown in figure 1. This dedicated traffic channel is assigned to each active user (mobile station) for both the uplink (mobile station to base station) and the downlink (base station to mobile station). In the dedicated traffic channel, several uplinks and/or downlinks may be simultaneously maintained and the users are separated from each other by the use of a spreading code. Typically a code division multiple access telecommunication system will support a variety of different services, for example real time and non-real time. For every link in the system a fast power control is required, so that the power levels for each of the links are maintained and interference is minimized.

The allocation of a spreading code to a certain user for the downlink transmission of data in a code division multiple access system means that a particular user has access to the capacity provided by that code. The data capacity can be seen as a channel, for example a dedicated traffic channel as shown in figure 1. This channel is divided up in time on a frame basis, whereby the length of the time frames is for example 10ms. Each frame can be made up of 16 time slots, each of 0,625ms.

In the downlink, user data, called DPDCH (dedicated physical data channel) is time multiplexed with layer 1 information, such as pilot bits, TPC bits (transmit power commands) and RI bits (rate indication), which together are known as the DPCCH (dedicated physical control channel) as shown in figure 1. If a user (mobile station) does not transmit all the time when the code is allocated, then capacity is wasted. That means that for bursty applications (for example web browsing), capacity may not be efficiently used when a channel is allocated to a single user.

Methods of allowing a number of such bursty users to have access to the downlink channel in order to multiplex traffic from those users onto the same channel and thus more efficiently use the available capacity have been described, for example in SMG2 UMTS layer 2/3 expert group 005/98 "UMTS MAC: multiplexing many packet data users on the downlink dedicated traffic channel", Lucent Technologies; SMG2 UMTS layer 2/3 expert group 159/98 "Packet data on shared downlink channel", Lucent Technologies; SMG2 UMTS layer 2/3 expert group 160/98 "Fast closed loop power control for packet data transmission on shared downlink dedicated physical channel", Lucent Technologies and SMGS UMTS 118/98 "Shared dedicated physical channels in FDD mode" Philips Consumer Communications. A problem with these proposals is that the power control in these schemes is not optimal and that changes in layer 1 are made to enable a fast power control to be used.

The object of the present invention is therefore to provide a method and devices for transmitting and receiving data in a code division multiple access telecommunication system, in which data are communicated in time frames comprising a plurality of time slots, in which an optimum and fast power control is enabled.

This object is achieved by a method for transmitting and receiving data in a code division multiple access telecommunication system, in which data are communicated in time frames comprising a plurality of time slots between a first communication device and one or more second communication devices, whereby the plurality of time slots in a time frame are allocated to at least two second communication devices, which is characterized in that at least two succeeding time slots are respectively allocated to one second communication device. The first communication device can for example be a base station and the second communication devices can for example be mobile stations of the telecommunication system.

The above object is further achieved by a device for transmitting and receiving data in a code division multiple access telecommunication system, in which data are transmitted to and received from second communication devices in time frames comprising a plurality of time slots, with means for allocating the plurality of time slots in a time frame to at least two second communication devices, whereby at least two succeeding time slots are respectively allocated to one second communication device, means for transmitting data in said allocated time slots to the corresponding second communication device, and means for receiving data in said allocating time slots from the corresponding second communication device. This device for transmitting and receiving data according to the present invention can for example be a base station and the second communication devices can for example be mobile stations of the telecommunication system.

The above object is further achieved by a device for transmitting and receiving data in a code division multiple access telecommunication system, in which data are communicated in time frames comprising a plurality of time slots, whereby the plurality of time slots in a time frame is allocated to the device for transmitting and receiving data and at least one further communication device, so that at least two succeeding time slots are respectively allocated to the device for transmitting and receiving data and to at least one further communication device, with means for transmitting and means for receiving data in said allocated time slots. This device for transmitting and receiving data according to the present invention can for example be a mobile station and the further communication device can for example be a further mobile station of the telecommunication system.

Since two or more succeeding time slots are allocated to one user, which can for example be a mobile station, an effective, fast and optimum power control is possible. An effective and optimum power control by the system known in the prior art are not possible, since only one time slot is allocated to one user. The present invention, however, enables a fast close loop power control on the basis of the C-I ratio of the transmitted signals, so that an optimum, fast and effective power control is ensured. Thus, the method and devices for transmitting and receiving data according to the present invention allows the multiplexing of bursty packet data onto a traffic channel, whilst enabling simultaneously a fast closed loop power control for an optimum power control.

Advantageously, the data transmitted or received in first time slots of at least two succeeding time slots allocated to one second communication device, which can for example be a mobile station, comprise control data. These control data can for example form the dedicated physical control channel (DPCCH). Further advantageously, a frame map is provided in one of the time frames, whereby said frame map comprises information on the allocation of time slots in the following time frames. In this case, the frame map can be provided in the first time slot of each time frame and comprises information on the allocation of the time slots in the respective time frame. Alternatively, the frame map is provided in the first time slot of each second time frame and comprises information on the allocation of the time slots in the two respective time frames. The frame map can thereby comprise information on the time frame(s), the time slots and the respectively allocated second communication devices which can be mobile stations. Advantageously, the power control is performed on the basis of data in succeeding time slots received in a second communication device. Thereby, said second communication device, which can be a mobile station, measures the received signal, generates a corresponding power control signal and transmits the power control signal to the first communication device, which performs a corresponding power control.

The device for transmitting and receiving data according the present invention, which can for example be a base station, can correspondingly comprise means for providing said frame map in one of the time frames. Said means for providing the frame map can thereby provide the frame map in the first time slot of each time frame or in the first time slot of each second time frame. Further advantageously, said device for transmitting and receiving data, which can be a base station, can comprise a means for performing power control of the basis of a power control signal received from a second communication device, which can for example be a mobile station.

The device for transmitting and receiving data according to the present invention, which can for example be a mobile station, can correspondingly comprise a means for processing said frame map received in one of the time frames. Further advantageously, said device for transmitting and receiving data, which can be a mobile station, can comprise a means for providing a power control signal on the basis of data received in succeeding time slots. Thereby, said means for providing a power control signal measures the received signal and generates a corresponding power control signal to be transmitted, for example to a corresponding base station.

In the following, the present invention is explained in detail relating to the enclosed drawings, in which
Figure 1 shows a time frame and time slot arrangement of the dedicated traffic channel in a code division multiple access telecommunication system,
Figure 2 shows the time frame and time slot arrangement according to the present invention, in which several succeeding time slots are allocated to respective users,
Figure 3 shows a further time frame and time slot arrangement according to the present invention, in which several succeeding time slots are allocated to different users,
Figure 4 shows a schematic block diagram of a telecommunication system,
Figure 5 shows a block diagram of a base station according to the present invention, and
Figure 6 shows a block diagram of a mobile station according to the present invention.

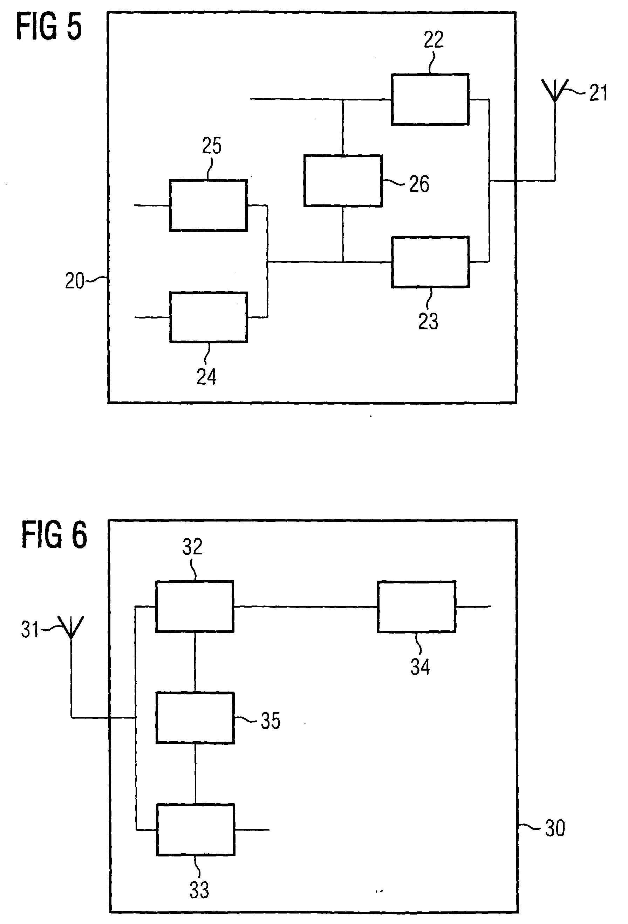

In figure 2, a time frame and time slot arrangement of a dedicated traffic channel of a code division multiple access telecommunication system according to the present invention is shown, in which data are communicated in time frames comprising a plurality of time slots. In the example shown in figure 2, 8 time slots are allocated to a user 1, which can for example be a mobile station 30 shown in figure 6, and 8 time slots are allocated to a user 2, which might be another mobile station connected to the same base station 20 shown in figure 5. The first time slot contains a frame map, which describes the destination of the different time slots in the frame. The second to ninth time slots are allocated to a first mobile station 30 and the tenth to sixteenth time slots in the first frame are allocated to a second mobile station 40. Since 8 time slots are allocated to each mobile station, the second time slot of the second frame is also allocated to the second mobile station. Like in the first frame, the first time slot and the second frame also comprises a frame map describing the destination of the different time slots in the second frame. The first time slots of the first frame and the second frame comprising a frame map also comprise dedicated physical control channel data, as pilot bits, TPC-bits (transmit power commands) and RI bits (rate indication). It is to be noted, that the time frame and time slot arrangements shown in figures 1 to 3 relate to the downlink transmission of data (base station to mobile station).

The first time slots in the allocated succeeding time slots also comprise dedicated physical control channel data, such as pilot bits, TPC bits (transmit power commands) and RI bits (rate indication), as shown for the time slots 10 allocated to the user 2 (second mobile station 40) in the first frame. The same is true for the time slot 2 allocated to the user 1 (first mobile station 30). Thereby, the control data (dedicated physical control channel data) can be comprised in each first time slot of a number of succeeding time slots allocated to one mobile station 30, or can be comprised in each of the succeeding time slots allocated to one mobile station 30.

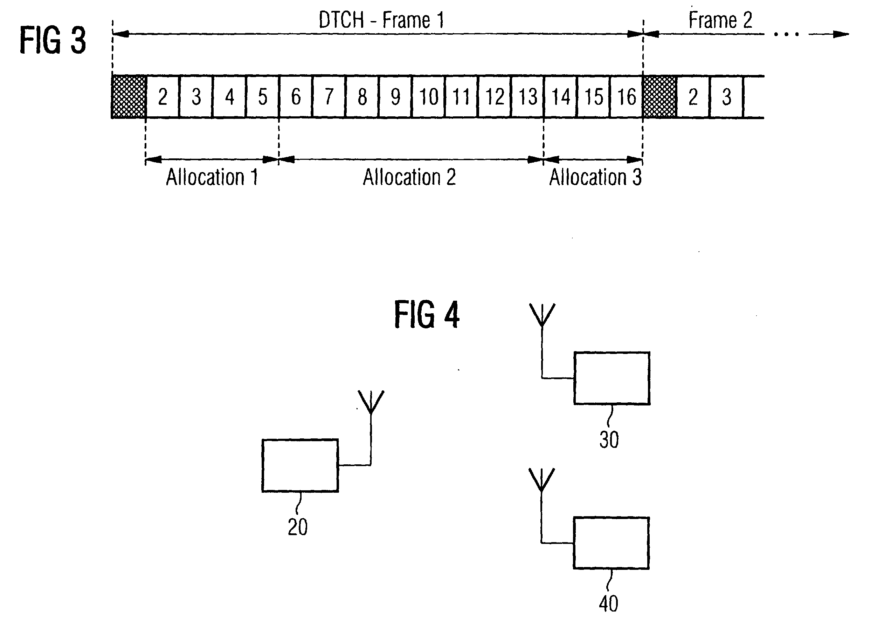

In figure 3, another example for a time frame and time slot arrangement and allocation according to the present invention is shown. In the example shown in figure 3, the time slots in the first frame are allocated to three different users, for example three different mobile stations. Thereby, the last four time slots of the time frame preceding the first time frame are allocated to the first user, so that only the first four time slots (time slot 2 to 5) of the first frame are allocated to the first user (allocation 1). Time slots 6 to 13 are allocated to the second user (allocation 2) and time slots 14 to 16 are allocated to the third user (allocation 3). Since 8 time slots are allocated to a respective user, the first five available time slots (time slot 2 to 6 of the second frame) are also allocated to the third user.

The number of time slots allocated to the respective user (mobile station) in the arrangements shown in figures 2 and 3 is 8 time slots. This number will have a minimum value greater than 2 to provide optimum power control. However, this number may be greater than the minimum due to system requirements. For an efficient fast closed loop power control, however, are at least two succeeding time slots necessary, so that a minimum of at least two succeeding time slots have to be allocated to a respective user (mobile station). Similar to the arrangement shown in figure 2, the first time slot in each frame in the example shown in figure 3 comprises a frame map and dedicate physical control channel data. Further, each first time slot of the succeeding time slots allocated to one user can comprise control data in form of dedicated physical control channel data.

The present invention proposes a minimum allocation period for the common channel in a code division multiple access telecommunication system, which consists of at least two succeeding time slots allocated to one user (for example mobile station 30 of figure 6) to allow the particular mobile station to achieve a fast closed loop power control and thus reduce the overall interference levels within the cell. To achieve fast power control it takes at least two time slots from the time when the transmission of data begins. After receiving a first downlink packet in the first time slot, the user (for example a mobile station 30) can make a measurement of the received signal and calculate a power control signal to be sent to the bar station. This power control signal informs the base station (for example base station 20 of figure 5) of how to adjust its power for the downlink transmission of data. In the example shown in figures 2 and 3, the number of time slots allocated to one user is set to 8 time slots. However, this is only an exemplary value and a higher or lower number of time slots can be used, as long as at least two succeeding time slots are allocated to one user to enable a fast closed loop power control.

In order to describe which user (mobile station 30) has been allocated which time slots in each frame, a frame map is to be transmitted in the first time slots of every frame describing the destination of the different time slots in the frame. If the allocation size is 8 and there are only 15 slots to allocate after the first time slot is taken up by the frame map, as for example in the example shown in figures 2 and 3, then a maximum of three allocations can be made per frame map. This would allow more accuracy in the allocation of the resources such that an exact allocation per time frame can be made. The format of the frame map could be simply a series of user identification, the frame and time slot number as a starting point and the number of time slots allocated for each user with an allocation in the following time frame. Alternatively, allocation of time slots can be made for two succeeding frames, so that 32 time slots are allocated. In this case, a frame map would be sent only every second frame and the resulting freed time slot could be used for user data transmission.

In figure 4, a general telecommunication system is shown, which comprises a base station 20 and several mobile stations 30, 40 in one cell. In figure 5, a base station 20 according to the present invention is shown, and in figure 6 a mobile station 30 according to the present invention is shown.

The base station 20 in figure 5 is arranged to transmit and receive data in a code division multiple access telecommunication system, in which data are transmitted to and received from mobile stations 30, 40 in time frames comprising a plurality of time slots. The base station 20 thereby comprises means 23 for transmitting data and means 22 for receiving data. Further, the base station 20 comprises a means 24 for allocating the plurality of time slots in a time frame to at least two mobile stations 30, 40, whereby at least two succeeding time slots are respectively allocated to one mobile station 30 or 40. Thereby, the means 24 can for example allocate time slots according to the arrangement shown in figures 2 and 3. The data transmitted or received in the first time slots of the at least two succeeding time slots allocated to one mobile station 30 or 40 can comprise control data, as for example the dedicated physical control channel data comprising pilot bits, TPC bits (transmit power commands) and RI bits (rate information).

The base station 20 can further comprise means 25 for providing a frame map in the time frames, whereby said frame map comprises information on the allocation of time slots in the respective and/or succeeding time frames. For example, the frame map can be provided in the first time slot of each time frame, as in the arrangement shown in figure 2. Alternatively, the frame map can be provided in every second time frame and comprise information on the allocation of the time slots in the two respective time frames. The means 25 for providing a frame map and the means 24 for allocating the time slots are both connected to the means 23 for transmitting data to the connected mobile stations 30, 40. Additionally, said base station 20 can comprise a means 26 for performing power control on the basis of a power control signal received from the respective mobile station 30, 40. Since the means 24 of the base station 20 allocated at least two succeeding time slots to one mobile station, a fast closed loop power control is possible. The mobile station 30, as for example shown in figure 6, comprises a means 35 for providing a power control signal on the basis of data received in the succeeding time slots. Thereby, said means 35 for providing the power control signal for example measures the estimated path loss and generates a corresponding power signal. This power control signal generated by the means 35 in the mobile station 30 is transmitted through a transmission means 33 of the mobile station 30 to the base station 20. In the base station 20, the receiving means 22 receives the power control signal and supplies the power control signal to the means 26 for performing a corresponding power control. The base station 20 further comprises an antenna 21 connected with the transmission means 23 and the receiving means 22 for receiving and transmitting data.

The mobile station 30 shown in figure 6 is arranged for transmitting and receiving data in a code division multiple access telecommunication system, in which data are communicated in time frames comprising a plurality of time slots. The plurality of time slots in a time frame is allocated to the mobile station 30 and at least one further mobile station, for example the mobile station 40, which is built in the same way or similar to the mobile station 30. The allocation of the at least two succeeding time slots to the mobile station 30 is performed in the corresponding base station, for example the base station 20 shown in figure 5. The mobile station 30 comprises a means 33 for transmitting data and a means 32 for receiving data which are connected to an antenna 31. The mobile station 30 comprises a means 35 for providing a power control signal on the basis of data received in the succeeding time slots. Since the corresponding base station, for example the base stations 20, transmit user data in at least two succeeding time slots to the base station 30, the means 35 of the mobile station 30 can provide a power control signal by measuring the estimated path loss and generating a corresponding power control signal. The power control signal is transmitted to the corresponding base station, which controls the power of the transmitted data correspondingly.

Further, the mobile station 30 comprises a means 34 for processing the frame map received in one of the time frames. Said frame map has been explained in detail relating to figures 2 and 3 and comprises information on the allocation of time slots in the respective time frames.

The mobile station 30 and the base station 20 of the present invention further comprise the known elements, which are necessary, such as coder, decoder, interleaves, deinterleaves and so on.

The main advantages of the method, the base station 20 and the mobile station 30 of the present invention is the possibility to perform a fast power control. Further, no requirements to transfer extra power control commands or besides the power control signal transmit from the corresponding mobile station or to modify physical layer procedure exist. A further advantage is the ability to exactly allocate resources upon the in the time frames, as and when they are required. Further advantageous is the ability to perform an interleaving over a number of time slots.

## Claims

1. Method for transmitting and receiving data in a code division multiple access telecommunication system, in which data are communicated in time frames comprising a plurality of time slots between a first communication device (20) and one or more second communication devices (30, 40), whereby the plurality of time slots in a time frame are allocated to at least two second communication devices (30, 40),
**characterized in**,
that at least two succeeding time slots are respectively allocated to one second communication device (30).

2. Method for transmitting and receiving data according to claim 1,
**characterized in**,
that the data transmitted or received in first time slots of at least two succeeding time slots allocated to one second communication device (30, 40) comprise control data.

3. Method for transmitting and receiving data according to claim 1 or 2,
**characterized in**,
that a frame map is provided in one of the time frames, said frame map comprising information on the allocation of time slots in the respective time frame(s).

4. Method for transmitting and receiving data according to claim 3,
**characterized in**,
that the frame map is provided in the first time slot of each time frame and comprises information on the allocation of the time slots in the respective time frame.

5. Method for transmitting and receiving data according to claim 3,
**characterized in**,
that the frame map is provided in the first time slot of each second time frame and comprises information on the allocation of the time slots in the two respective time frames.

6. Method for transmitting and receiving data according to claim 3, 4 or 5,
**characterized in**,
that the frame map comprises information on the time frame, the time slots and the respectively allocated second communication devices (30, 40).

7. Method for transmitting and receiving data according to one of the preceding claims,
**characterized in**,
that a power control is performed on the basis of data in succeeding time slots received in a second communication device (30, 40).

8. Method for transmitting and receiving data according to claim 7,
**characterized in**,
that said second communication device (30, 40) measures the received signal, generates a corresponding power control signal and transmits the power control signal to the first communication device, which performs a corresponding power control.

9. Device (20) for transmitting and receiving data in a code division multiple access telecommunication system, in which data are transmitted to and received from second communication devices in time frames comprising a plurality of time slots, with means (24) for allocating the plurality of time slots in a time frame to at least two second communication devices (30, 40), whereby at least two succeeding time slots are respectively allocated to one second communication device,
means (23) for transmitting data in said allocated time slots to the corresponding second communication device, and
means (22) for receiving data in said allocated time slots form the corresponding second communication device.

10. Device (20) for transmitting and receiving data according to claim 9,
**characterized in**,
that the data transmitted or received in first time slots of at least two succeeding time slots allocated to one second communication device (30, 40) comprise control data.

11. Device (20) for transmitting and receiving data according to claim 9 or 10,
**characterized by**
means (25) for providing a frame map in one of the time frames, said frame map comprising information on the allocation of time slots in the respective time frame(s).

12. Device (20) for transmitting and receiving data according to claim 11,
**characterized in**,
that said means (25) provides the frame map in the first time slot of each time frame and that said frame map comprises information on the allocation of the time slots in the respective time frame.

13. Device (20) for transmitting and receiving data according to claim 11,
**characterized in**,
that said means (25) provides the frame map in the first time slot of each second time frame and that said frame map comprises information on the allocation of the time slots in the two respective time frames.

14. Device (20) for transmitting and receiving data according to claim 11, 12 or 13,
**characterized in**,
that the frame map comprises information on the time frame, the time slots and the respectively allocated second communication devices.

15. Device (20) for transmitting and receiving data according to one of the claims 9 to 14,
**characterized by**
means (26) for performing power control on the basis of a power control signal received from a second communication device.

16. Device (30) for transmitting and receiving data in a code division multiple access telecommunication system, in which data are communicated in time frames comprising a plurality of time slots, whereby the plurality of time slots in a time frame is allocated to the device for transmitting and receiving data and at least one further communication (40) device, so that at least two succeeding time slots are respectively allocated to the device (30) for transmitting and receiving data and to at least one further communication device (40), with
means (33) for transmitting and means (32) for receiving data in said allocated time slots.

17. Device (30) for transmitting and receiving data according to claim 16,
**characterized in**,
that the data transmitted or received in first time slots of at least two succeeding time slots comprise control data.

18. Device (30) for transmitting and receiving data according to claim 16 or 17,
**characterized by**
means (34) for processing a frame map received in one of the time frames, said frame map comprising information on the allocation of time slots in the respective time frame(s).

19. Device (30) for transmitting and receiving data according to claim 18,
**characterized in**,
that the frame map is provided in the first time slot of each time frame and comprises information on the allocation of the time slots in the respective time frame.

20. Device (30) for transmitting and receiving data according to claim 18,
**characterized in**,
that the frame map is provided in the first time slot of each second time frame and comprises information on the allocation of the time slots in the two respective time frames.

21. Device (30) for transmitting and receiving data according to claim 18, 19 or 20,
**characterized in**,
that the frame map comprises information on the time frame, the time slots and the respectively allocated further communication devices (40).

22. Device (30) for transmitting and receiving data according to one of the claims 16 to 21,
**characterized by**
means (35) for providing a power control signal on the basis of data received in succeeding time slots.

23. Device (30) for transmitting and receiving data according to claim 22,
**characterized in**,
that said means (35) for providing a power control signal measures the received signal and generates a corresponding power control signal to be transmitted.
